# EUROPÄISCHE PATENTSCHRIFT

(11) **EP 4 034 436 B1**
(45) Veröffentlichungstag und Bekanntmachung des Hinweises auf die Patenterteilung: **03.04.2024**
(21) Anmeldenummer: 20771218.3
(22) Anmeldetag: 01.09.2020
(51) Int. Cl.: B60T 13/68, B60T 13/66, B60T 17/22, B60T 8/17, B60T 13/04

(54) **ELEKTROPNEUMATISCHE PARKBREMSVENTILEINHEIT**
ELECTROPNEUMATIC PARKING-BRAKE VALVE UNIT
UNITÉ DE SOUPAPE DE FREIN DE STATIONNEMENT ÉLECTROPNEUMATIQUE

(30) Priorität: 25.09.2019 DE 102019125747
(43) Veröffentlichungstag der Anmeldung: 03.08.2022
(73) Patentinhaber: ZF CV Systems Europe BV, 1170 Brüssel (BE)
(72) Erfinder: SCHUPPERT, Fabian, 31515 Wunstorf (DE); DÜCKMANN, Rudolf, 30916 Isernhagen (DE); KRAUS, Hauke, 30455 Hannover (DE)
(74) Vertreter: Rabe, Dirk-Heinrich
(86) Internationale Anmeldenummer: PCT/EP2020/074281
(87) Internationale Veröffentlichungsnummer: WO 2021/058234

(56) Entgegenhaltungen:
- WO-A1-2008/122382
- DE-A1-102005 058 799

## Beschreibung

Die Erfindung betrifft eine elektropneumatische Parkbremsventileinheit für ein elektronisch gesteuertes pneumatisches Bremssystem eines Fahrzeugs, insbesondere Nutzfahrzeugs, mit wenigstens einem ersten Vorratsanschluss zum Empfangen von Vorratsdruck von einer Druckluftquelle, wenigstens einem Federspeicheranschluss zum Anschließen von wenigstens einem Federspeicherbremszylinder des Fahrzeugs, einer Feststellbremsventilanordnung mit wenigstens einem ersten Bistabilventil, wobei in Abhängigkeit von der Schaltung des ersten Bistabilventils ein Federspeicherbremsdruck an dem Federspeicheranschluss aussteuerbar ist. Die Erfindung betrifft ferner ein elektropneumatisches Parkbremsmodul mit einer ebensolchen elektropneumatischen Parkbremsventileinheit sowie ein Luftaufbereitungsmodul, ein Verfahren zum Betreiben eines elektronisch gesteuerten elektropneumatischen Bremssystems eines Fahrzeugs sowie ein Fahrzeug.

DE 10 2005 058799 A1 zeigt eine elektropneumatische Bremssteuerungseinrichtung zur Steuerung einer Feststellbremse eines Fahrzeuges mit Betriebsbremse und Feststellbremse, wobei die Betriebsbremse ein Bremspedal und in Wirkverbindung mit dem Bremspedal stehende Druckluft betätigbare Bremszylinder zur Betätigung von Radbremsen aufweist, wobei wenigstens ein Bremszylinder als Federspeicherbremszylinder ausgebildet ist und der Federspeicherteil des Federspeicherbremszylinders die Feststellbrems betätigt, wobei die Bremssteuerungseinrichtung derart ausgebildet ist, dass bei einem Ausfall der elektrischen Energieversorgung der Federspeicherteil des Federspeicherbremszylinders durch Betätigen des Bremspedals dauerhaft entlüftbar ist, um einen Parkzustand der Feststellbremse herzustellen.

Elektropneumatische Parkbremsventile der vorstehend genannten Art sind bekannt und werden bei Nutzfahrzeugen eingesetzt, um das Nutzfahrzeug im geparkten Zustand abzubremsen. Dazu weisen Nutzfahrzeuge in der Regel sogenannte Federspeicherbremszylinder auf, die auch Teil eines Kombizylinders, auch Tri-Stop-Zylinder genannt, sein können. Solche Federspeicherbremszylinder weisen eine Feder auf, die dafür sorgt, dass der Federspeicherbremszylinder im entlüfteten Zustand zuspannt, während er durch Zuführen von Luft zu einer Kammer entgegen der Federkraft gelöst werden kann. Das heißt, zum Einlegen der Parkbremse müssen diese Federspeicherbremszylinder entlüftet werden. solche Federspeicherbremszylinder sind üblicherweise wenigstens an der Hinterachse des Nutzfahrzeugs vorgesehen. Sie können aber auch zusätzlich an der Vorderachse vorgesehen sein. Auch ist es üblich, dass Anhänger für Nutzfahrzeuge über ähnliche Systeme verfügen und einen entsprechenden über ein Anhängersteuerventil bereitgestellt bekommen, um die entsprechenden Federspeicherbremszylinder des Anhängers einzulegen, oder zu lösen.

Um nun während der Fahrt den belüfteten Zustand der Federspeicherbremszylinder dauerhaft zu halten, ohne dass hierfür ein monostabiles Ventil permanent bestromt werden müsste, hat sich der Einsatz von sogenannten Bistabilventilen bewährt. Bistabilventile haben zwei stabile Schaltzustände, das heißt, zwei Schaltzustände, die stromlos gehalten werden können. Nur zum Wechsel von einem in den anderen Schaltzustand ist das Anlegen einer Spannung erforderlich. Auf diese Weise ist es möglich, beim Start des Fahrzeugs, das Bistabilventil in den entsprechenden Zustand zu schalten, in dem dieses dann verharrt, sodass die Federspeicherbremszylinder während der Fahrt belüftet bleiben.

In bestimmten kritischen Fehlerfällen eines derartigen elektronisch gesteuerten, pneumatischen Bremssystems können solche Federspeicherbremszylinder auch als Zusatzbremsen verwendet werden. In diesem Fall werden dann beispielsweise die Betriebsbremsen des Nutzfahrzeugs weiterhin betrieben, wobei Luft zum Betrieb der Betriebsbremsen aus den Federspeicherbremszylindern entnommen wird. Auch ist es denkbar, die Federspeicherbremszylinder anstelle der Betriebsbremsen zum Abbremsen des Fahrzeugs zu verwenden. In beiden Fällen kann das Fahrzeug trotz des Fehlers noch kontrolliert gebremst werden und kommt schließlich zum Stehen.

Als problematisch hat sich hierbei allerdings herausgestellt, dass in einem solchen Fall das Bistabilventil immer noch in der zum Belüften der Federspeicherbremszylinder notwendigen Stellung verharrt. Wird nun das Fahrzeug nach dem Fehler neu gestartet, kann es zu Situationen kommen, in denen die Betriebsbremsen des Fahrzeugs noch nicht betätigt sind, aber aufgrund des erneuten Bereitstellens von Druckluft und des auf "Fahren" geschalteten Bistabilventils, die Federspeicherbremszylinder bereits gelöst werden. In diesem Fall wäre das Fahrzeug unkontrolliert nicht gebremst und könnte wegrollen.

Die vorliegende Erfindung hat zur Aufgabe, dieses Problem wenigstens teilweise zu beheben, und insbesondere ein unkontrolliertes Wegrollen nach einem schweren elektrischen Fehler zu vermeiden.

Die Erfindung löst das Problem in einem ersten Aspekt bei der eingangs genannten elektropneumatischen Parkbremsventileinheit durch ein pneumatisch schaltbares Halteventil mit einem Halteventil-Steueranschluss, das zwischen den ersten Vorratsanschluss und das erste Bistabilventil geschaltet ist und federbelastet in eine erste Schaltstellung vorgespannt ist, in welcher das erste Bistabilventil mit einer Entlüftung verbunden ist, und bei Überschreiten eines am Halteventil-Steueranschluss bereitgestellten ersten Steuerdrucks in eine zweite Schaltstellung geschaltet, in der das erste Bistabilventil zum Empfang von Vorratsdruck mit dem ersten Vorratsdruckanschluss verbunden ist. Das Halteventil führt also dazu, dass das Bistabilventil nur dann mit Vorratsdruck versorgt werden kann, und folglich nur dann Vorratsdruck an die Federspeicherbremszylinder weiterleiten kann, wenn das Halteventil in der zweiten Schaltstellung ist. Das Halteventil ist aber nur dann in der zweiten Schaltstellung, wenn der am Halteventil-Steueranschluss bereitgestellte erste Steuerdruck einen ersten Schwellwert überschreitet. Der erste Steuerdruck wird vorzugsweise von einem weiteren Modul bereitgestellt, welches beispielsweise und vorzugsweise nur dann Druck führt, wenn Betriebsbremsen des Fahrzeugs aktiv sind. Erst dann können in einem solchen Fall die Federspeicherbremszylinder entlüftet werden, da erst dann das Bistabilventil, unabhängig von dessen Schaltzustand, mit Vorratsdruck versorgt werden kann. Auf diese Weise ist eine Sicherung für die elektropneumatische Parkbremsventileinheit geschaffen, die verhindern kann, dass das Fahrzeug unkontrolliert wegrollt.

Gemäß einer ersten bevorzugten Ausführungsform weist das Halteventil einen mit dem ersten Vorratsanschluss verbundenen ersten Haltventilanschluss, einen mit dem ersten Bistabilventil verbundenen zweiten Haltventilanschluss und einen mit der Entlüftung verbundenen dritten Haltventilanschluss auf. Das Haltventil ist demnach vorzugsweise als pneumatisch schaltbares 3/2-Wegeventil ausgebildet, das das Bistabilventil wechselweise mit dem Vorratsanschluss und der Entlüftung verbindet.

Erfindungsgemäß wird der erste Steuerdruck von einem elektrisch schaltbaren Steuerventil ausgesteuert, welches Teil der elektropneumatischen Parkbremsventileinheit ist, oder entfernt zu diesem angeordnet ist. Beispielsweise kann das Steuerventil mit der Parkbremsventileinheit in ein gemeinsames Modul integriert sein, oder Teil eines benachbarten Moduls sein. Das Steuerventil kann genau zu diesem Zweck vorgesehen sein, oder ein ohnehin vorhandenes Ventil einer weiteren Einheit, beispielsweise eines Anhängersteuerventils, einer Luftaufbereitung, eines Mehrkreisschutzventils oder Ähnlichem sein. Vorzugsweise wird das elektrisch schaltbare Steuerventil erst dann geschaltet, wenn Betriebsbremsen des Nutzfahrzeugs aktiv sind.

In einer bevorzugten Weiterbildung weist das Steuerventil einen mit einer wenigstens während des Betriebs des Nutzfahrzeugs druckführenden pneumatischen Leitung verbundenen ersten Steuerventilanschluss auf, einen mit dem Halteventil-Steueranschluss verbundenen zweiten Steuerventilanschluss und einen mit einer oder der Entlüftung verbundenen dritten Steuerventilanschluss auf, wobei das Steuerventil stromlos den zweiten Steuerventilanschluss mit dem dritten Steuerventilanschluss verbindet. Auf diese Weise kann sichergestellt werden, dass Druck während des Betriebs des Nutzfahrzeugs über das Steuerventil an das Halteventil weitergegeben werden kann, um das Halteventil entsprechend zu schalten. Es ist nicht zwingend erforderlich, dass das Steuerventil unmittelbar mit einem Vorrat verbunden ist. Vielmehr reicht, da von dem Steuerventil nur ein Steuerdruck an den Halteventil-Steueranschluss weitergegeben werden muss, auch eine druckführende pneumatische Leitung aus, um diesen Druck bereitzustellen. Auf diese Weise lässt sich die elektropneumatische Parkbremsventileinheit besonders einfach im Bremssystem integrieren, ohne großen zusätzlichen Verschlauchungsaufwand.

In einer bevorzugten Weiterbildung weist die elektropneumatische Parkbremsventileinheit eine Halteventil-Rückführleitung auf, die einen vom Halteventil an das erste Bistabilventil ausgesteuerten Druck als zweiten Steuerdruck an dem Halteventil-Steueranschluss bereitstellt. Hierdurch kann eine Selbsthaltung des Halteventils erreicht werden. Hat das Halteventil einmal geschaltet und steuert den am ersten Halteventilanschluss angeschlossenen Vorratsdruck durch, wird dieser über die Halteventil-Rückführleitung rückgeführt, sodass das Halteventil geschaltet bleibt. In dem Fall kann dann, auch bei Wegfall des vom Steuerventil ausgesteuerten Steuerdrucks bzw. unabhängig von der Schaltstellung des Steuerventils, das Halteventil in der zweiten Schaltstellung verbleiben, sodass die Federspeicherbremszylinder belüftet bleiben können.

Vorzugsweise weist die Feststellbremsventilanordnung eine das erste Bistabilventil aufweisende Vorsteuereinheit zum Bereitstellen wenigsten eines ersten Vorsteuerdrucks und eine Hauptventileinheit auf, die den ersten Vorsteuerdruck empfängt und in Übereinstimmung mit dem Empfang des ersten Vorsteuerdrucks den Feststellbremsdruck aussteuert. Das Bistabilventil wird in diesem Fall nur dazu verwendet, den Vorsteuerdruck bereitzustellen, aber nicht den Volumendruck, um die Federspeicherbremszylinder tatsächlich zu belüften.

Vorzugsweise ist zu diesem Zweck in der Vorsteuereinheit ein dem ersten Bistabilventil zugeordnetes erstes 2/2-Wegeventil vorgesehen, welches einen mit dem ersten Bistabilventil verbundenen ersten 2/2-Wegeventil-Anschluss und einen mit der Hauptventileinheit verbundenen zweiten 2/2-Wegeventil-Anschluss, zum Bereitstellen des ersten Vorsteuerdrucks an der Hauptventileinheit aufweist. Das erste 2/2-Wegeventil ist vorzugsweise stromlos offen und bestromt in einer geschlossenen Schaltstellung. Auf diese Weise lässt sich der am Federspeicheranschluss bereitgestellte Federspeicherbremsdruck gestuft be- bzw. entlüften, ohne hierfür das Bistabilventil hin- und herzuschalten.

Zum Umsetzen des von der Vorsteuereinheit bereitgestellten ersten Vorsteuerdrucks in einen Volumendruck, weist die Hauptventileinheit vorzugsweise wenigstens ein erstes Relaisventil auf, welches einen den Vorratsdruck empfangenden ersten Relaisventil-Vorratsanschluss, einen mit dem Federspeicheranschluss verbundenen ersten Relaisventil-Arbeitsanschluss, einen mit einer oder der Entlüftung verbundenen ersten Relaisventil-Entlüftungsanschluss und einen mit der Vorsteuereinheit verbundenen und den ersten Vorsteuerdruck empfangenden ersten Relaisventil-Steueranschluss aufweist. Das Relaisventil ist wie herkömmlich bekannt ausgebildet und übersetzt den am ersten Relaisventil-Steueranschluss empfangenen Steuerdruck in einen Volumendruck, der am ersten Relaisventil-Arbeitsanschluss ausgesteuert und am Federspeicheranschluss bereitgestellt wird.

Weiterhin ist bevorzugt, dass die elektropneumatische Parkbremsventileinheit einen Löseanschluss zum manuellen Bereitstellen eines Lösedrucks zum manuellen Aussteuern des Federspeicherdrucks aufweist. Über einen solchen Löseanschluss kann manuell, beispielsweise mit einer Pumpe oder dergleichen, Druck ausgesteuert werden, der dann am Federspeicheranschluss bereitgestellt werden kann. Eine solche Funktion wird auch als Anti-Compound Anschluss bezeichnet und kann insbesondere dazu verwendet werden, nach einem Fehlerfall aufgrund eines sogenannten Herunterpumpens oder Aufbrauchens des in den Federspeicherbremszylindern vorhandenen Drucks, diese wieder zu lösen. Für den Fall, dass die Federspeicherbremszylinder zugespannt sind, nachdem ein schwerer elektronischer Fehler aufgetreten ist und das Fahrzeug nicht wieder gestartet werden kann, könnten andernfalls die Federspeicherbremszylinder nicht wieder gelöst werden.

In einer weiteren bevorzugten Ausführungsform weist die Vorsteuereinheit ein zweites Bistabilventil zum Bereitstellen eines zweiten Vorsteuerdrucks an der Hauptventileinheit auf, wobei die Hauptventileinheit den zweiten Vorsteuerdruck empfängt und in Übereinstimmung mit dem Empfang des zweiten Vorsteuerdrucks einen Anhängerdruck an einem Anhängeranschluss zum Lösen von Federspeicherbremsen eines an das Fahrzeug angeschlossenen Anhängers aussteuert. An den Anhänger wird vorzugsweise ein eigenständiger Druck, nämlich der Anhängerdruck, übergeben und nicht der Federspeicherbremsdruck. Auf diese Weise lässt sich der Anhänger unabhängig vom Zugfahrzeug steuern und einbremsen. Dennoch können beide Systeme in derselben Vorsteuereinheit und derselben Hauptventileinheit untergebracht sein, und insbesondere auch durch eine gemeinsame Steuerung (ECU) gesteuert werden.

In Übereinstimmung damit weist vorzugsweise die Hauptventileinheit ein zweites Relaisventil auf, welches einen den Vorratsdruck empfangenden zweiten Relaisventil-Vorratsanschluss, einen mit dem Anhängeranschluss verbundenen zweiten Relaisventil-Arbeitsanschluss, einen mit einer oder der Entlüftung verbundenen zweiten Relaisventil-Entlüftungsanschluss und einen mit der Vorsteuereinheit verbundenen und den zweiten Vorratsdruck empfangenden zweiten Relaisventil-Steueranschluss auf. Das zweite Relaisventil kann wie das erste Relaisventil ausgebildet sein.

In einem zweiten Aspekt löst die Erfindung die eingangs genannte Aufgabe durch ein elektropneumatisches Parkbremsmodul mit einer elektropneumatischen Parkbremsventileinheit nach einer der vorstehend beschriebenen bevorzugten Ausführungsformen einer elektropneumatischen Parkbremsventileinheit gemäß dem ersten Aspekt der Erfindung, und einer Mehrkreisschutzventileinheit, die bezogen auf die Druckluftquelle der elektropneumatischen Parkbremsventileinheit vorgeschaltet ist, wobei die Mehrkreisschutzventileinheit den ersten Steuerdruck bereitstellt. Auf diese Weise wird eine besonders bevorzugte und einfache Möglichkeit der Bereitstellung des ersten Steuerdrucks erreicht. Erst wenn die komplette Druckluftversorgung hochgefahren ist, und das Mehrkreisschutzventil mit Druckluft versorgt ist, können auch die Betriebsbremsen betätigt werden. Erst zu diesem Zeitpunkt wird dann der erste Steuerdruck von der Mehrkreisschutzventileinheit bereitgestellt, sodass dann auch die elektropneumatische Parkbremsventileinheit mit Vorratsdruck versorgt wird, um in der Folge die Federspeicherbremszylinder lösen zu können. Eine gesonderte Schaltung oder das Vorsehen eines gesonderten Ventils ist in diesem Fall nicht notwendig. Der erste Steuerdruck wird auf einfache Art und Weise aus der Mehrkreisschutzventileinheit abgezweigt.

Vorzugsweise ist das elektrisch schaltbare Steuerventil ein Ventil der Mehrkreisschutzventileinheit. Auf diese Weise wird die Funktion der elektropneumatischen Parkbremsventileinheit weiter mit der Mehrkreisschutzventileinheit verzweigt und von dieser abhängig. Auf diese Weise kann die Sicherheit weiter erhöht werden, und ein unkontrolliertes Wegrollen nach dem Start des Nutzfahrzeugs vermieden werden.

Das Steuerventil dient in der Mehrkreisschutzventileinheit vorzugsweise dazu, während einer Regenerationsphase eines Lufttrockners eine gedrosselte Rückströmung trockener Regenerationsluft aus dem Systemvolumen zu erlauben. Eine solche Rückströmung findet nur bei entlüftetem Lufttrockner statt. Bei einem normalen Druckniveau kann durch denselben Schaltvorgang deshalb eine Vorsteuerung des Halteventils erreicht werden. Dies ist eine besonders bevorzugte Ausgestaltung der Verschaltung zwischen elektropneumatischer Parkbremsventileinheit und Mehrkreisschutzventileinheit.

In einer weiteren bevorzugten Ausgestaltung des elektropneumatischen Parkbremsmoduls, ist in das Parkbremsmodul eine Anhängersteuereinheit integriert. Auf dieses Weise kann eine Integration von solchen Komponenten weiter erhöht werden. Insbesondere ist es möglich, die elektropneumatische Parkbremsventileinheit sowie die Anhängersteuereinheit durch eine gemeinsame Intelligenz anzusteuern, wodurch insgesamt elektronische Steuereinheiten eingespart werden können.

Gemäß einem dritten Aspekt, löst die Erfindung die eingangs genannte Aufgabe durch ein Luftaufbereitungsmodul, umfassend ein Parkbremsmodul nach einer der vorstehend beschriebenen bevorzugten Ausführungsformen eines elektropneumatischen Parkbremsmoduls gemäß dem zweiten Aspekt der Erfindung und eine Luftaufbereitungseinheit. Vorzugsweise sind die Luftaufbereitungseinheit und das elektropneumatische Parkbremsmodul gemeinsam, in das Luftaufbereitungsmodul integriert. Auch in diesem Aspekt können Synergien zwischen den einzelnen Elementen gehoben werden, sodass das System insgesamt verbessert ist.

In einem vierten Aspekt löst die Erfindung die eingangs genannte Aufgabe durch ein Verfahren zum Betreiben eines elektronisch gesteuerten pneumatischen Bremssystems eines Fahrzeugs, insbesondere Nutzfahrzeugs, mit einer elektropneumatischen Parkbremsventileinheit. Die elektropneumatische Parkbremsventileinheit weist wenigstens einen ersten Vorratsanschluss zum Empfangen von Vorratsdruck von einer Druckluftquelle, wenigstens einem Federspeicheranschluss zum Anschließen von wenigstens einem Federspeicherbremszylinder des Fahrzeugs sowie einer Feststellbremsventilanordnung mit wenigstens einem ersten Bistabilventil auf, wobei in Abhängigkeit von der Schaltung des ersten Bistabilventils ein Federspeicherbremsdruck an dem Federspeicheranschluss aussteuerbar ist. Das Verfahren umfasst die Schritte: Ermitteln eines Fehlers in dem Bremssystem, der ein Schalten des ersten Bistabilventils verhindert; Entlüften des Federspeicheranschlusses zum Stoppen des Fahrzeugs; und Verbinden von wenigstens zwei Anschlüssen des ersten Bistabilventils mit einer Entlüftung zum Verhindern einer Aussteuerung des Federspeicherbremsdrucks nach erfolgter Entlüftung des Federspeicheranschlusses. Auf diese Weise ist unabhängig von der Schaltung des Bistabilventils eine Entlüftung der Federspeicherbremszylinder sichergestellt. Auch bei Inbetriebnahme des Fahrzeugs nach Beheben des Fehlers und nach Schalten des Bistabilventils in eine der beiden Schaltstellungen, bleiben die Federspeicherbremszylinder entlüftet. Erst wenn einer der beiden bis dahin mit einer Entlüftung verbundenen Anschlüsse des Bistabilventils wieder belüftet wird, insbesondere, indem dieser mit einem weiteren Ventil, beispielsweise und vorzugsweise einem Halteventil, verbunden ist, welches dann diesem Anschluss einen Druck zuführt, können die Federspeicherbremszylinder wieder belüftet werden. Vorzugsweise ist die elektropneumatische Parkbremsventileinheit im Rahmen des Verfahrens gemäß einer der vorstehend beschriebenen bevorzugten Ausführungsformen einer elektropneumatischen Parkbremsventileinheit gemäß dem ersten Aspekt der Erfindung ausgebildet.

Für Vorteile und Weiterbildungen des Verfahrens wird vollumfänglich auf die obige Beschreibung zum ersten Aspekt der Erfindung Bezug genommen. Weitere Vorteile und Weiterbildungen sind auch in den abhängigen Ansprüchen niedergelegt.

In einem fünften Aspekt der Erfindung wird die eingangs genannte Aufgabe gelöst durch ein Fahrzeug, insbesondere Nutzfahrzeug, mit einem elektronisch gesteuerten pneumatischen Bremssystem mit einer elektropneumatischen Parkbremsventileinheit nach einer der vorstehend beschriebenen bevorzugten Ausführungsformen einer elektropneumatischen Parkbremsventileinheit gemäß dem ersten Aspekt der Erfindung. Auch hier wird für weitere Vorteile und Weiterbildungen auf die Beschreibung zum ersten Aspekt der Erfindung sowie auch zum zweiten und dritten Aspekt der Erfindung vollumfänglich verwiesen. Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die Erfindung ist nur durch den Umfang der beigefügten Ansprüche beschränkt. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine Schaltanordnung einer elektropneumatischen Parkbremsventileinheit gemäß dem ersten Aspekt der Erfindung;
- Figur 2: eine Schaltanwendung eines elektropneumatischen Parkbremsmoduls gemäß dem zweiten Aspekt der Erfindung;
- Figur 3: ein zweites Ausführungsbeispiel eines elektropneumatischen Parkbremsmoduls; und
- Figur 4: ein drittes Ausführungsbeispiel eines elektropneumatischen Parkbremsmoduls mit integrierter Anhängersteuereinheit.

Eine elektropneumatische Parkbremsventileinheit 1 weist einen ersten Vorratsanschluss 2 auf, über den die elektropneumatische Parkbremsventileinheit 1 Vorratsdruck pV empfängt. Der Vorratsdruck pV kann von einem nicht gezeigten Druckluftvorrat bereitgestellt werden, oder direkt von der Luftaufbereitungseinheit stammen. Ferner weist das elektropneumatische Parkbremsmodul 1 wenigstens einen Federspeicheranschluss 6, zum Anschließen von wenigstens einem (hier nicht gezeigten) Federspeicherbremszylinder an. An den Federspeicheranschluss 6 können auch mehr als nur ein Federspeicherbremszylinder angeschlossen werden, nämlich insbesondere zwei oder vier, die an einer Hinterachse des Fahrzeugs vorgesehen sind. Die elektropneumatische Parkbremsventileinheit 1 ist dazu ausgelegt, an dem Federspeicheranschluss 6 einen Federspeicherdruck pF bereitzustellen. Bei Vorliegen eines Federspeicherdrucks pF, also bei belüftetem Federspeicheranschluss 6, sind die entsprechend angeschlossenen Federspeicherbremszylinder gelöst, im umgekehrten Fall, bei entlüftetem Federspeicheranschluss 6, zugespannt.

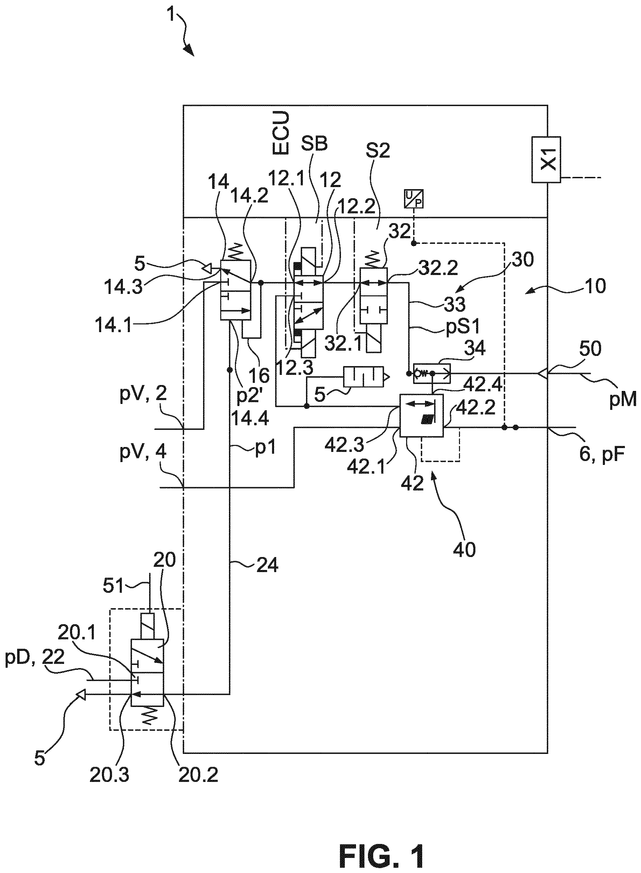

Um den Federspeicherbremsdruck pF bereitzustellen, weist die elektropneumatische Parkbremsventileinheit 1 eine Feststellbremsventilanordnung 10 auf. Die Feststellbremsventilanordnung 10 weist mehrere Ventile auf, nämlich insbesondere ein erstes Bistabilventil 12. Das erste Bistabilventil 12 hat eine erste und eine zweite Schaltstellung, wobei in Abhängigkeit von den Schaltstellungen des ersten Bistabilventils 12, der Federspeicherbremsdruck pF ausgesteuert wird oder nicht. Die beiden Schaltstellungen des ersten Bistabilventils 12 sind stabil, das heißt sie werden auch stromlos gehalten. Dies wird in der Regel dadurch realisiert, dass zwei entsprechende Endmagnete vorgesehen sind, die den Anker in den Endlagen stabil halten. Das erste Bistabilventil 12 weist einen ersten Bistabilventilanschluss 12.1, einen zweiten Bistabilventilventilanschluss 12.2 und einen dritten Bistabilventilanschluss 12.3 auf. In der ersten in Figur 1 gezeigten Schaltstellung ist der erste Bistabilventilanschluss 12.1 mit dem zweiten Bistabilventilanschluss 12.2 verbunden. In der zweiten, in Figur 1 nicht gezeigten Schaltstellung, ist der zweite Bistabilventilanschluss 12.2 mit dem dritten Bistabilventilanschluss 12.3 verbunden. Der dritte Bistabilventilanschluss 12.3 ist mit einer Entlüftung 5 verbunden, die als zentrale Entlüftung den elektropneumatischen Parkbremsventileinheit 1 ausgebildet, oder separat vorgesehen sein kann. In der zweiten in Figur 1 nicht gezeigten Schaltstellung wird also der zweite Bistabilventilanschluss 12.2 entlüftet.

Zwischen das erste Bistabilventil 12 und den ersten Vorratsanschluss 2 ist ein pneumatisch schaltbares Halteventil 14 geschaltet. Das pneumatisch schaltbare Halteventil 14 weist einen ersten Halteventilanschluss 14.1, einen zweiten Halteventilanschluss 14.2, einen dritten Halteventilanschluss 14.3 und einen Halteventil-Steueranschluss 14.4 auf. Das Halteventil ist monostabil und in die in Figur 1 gezeigte erste Schaltstellung vorgespannt. In der ersten in Figur 1 gezeigten Schaltstellung ist der dritte Halteventilanschluss 14.3 mit dem zweiten Halteventilanschluss 14.2 verbunden. Der dritte Halteventilanschluss 14.3 ist seinerseits mit einer Entlüftung 5 verbunden, sodass der zweite Halteventilanschluss 14.2 entlüftet ist. Der zweite Halteventilanschluss 14.2 ist mit dem ersten Bistabilventilanschluss 12.1 verbunden. In der in Figur 1 gezeigten Schaltstellung also ist auch der erste Bistabilventilanschluss 12.1 über das Halteventil 14 mit der Entlüftung 5 verbunden, sodass unabhängig von der Schaltstellung des ersten Bistabilventils 12 der zweite Bistabilventilanschluss 12.2 entlüftet ist. Die Aussteuerung eines Federspeicherbremsdrucks pF ist in diesem Fall nicht möglich. Unabhängig von der Schaltstellung des ersten Bistabilventils 12 bleibt der Federspeicheranschluss 6 entlüftet.

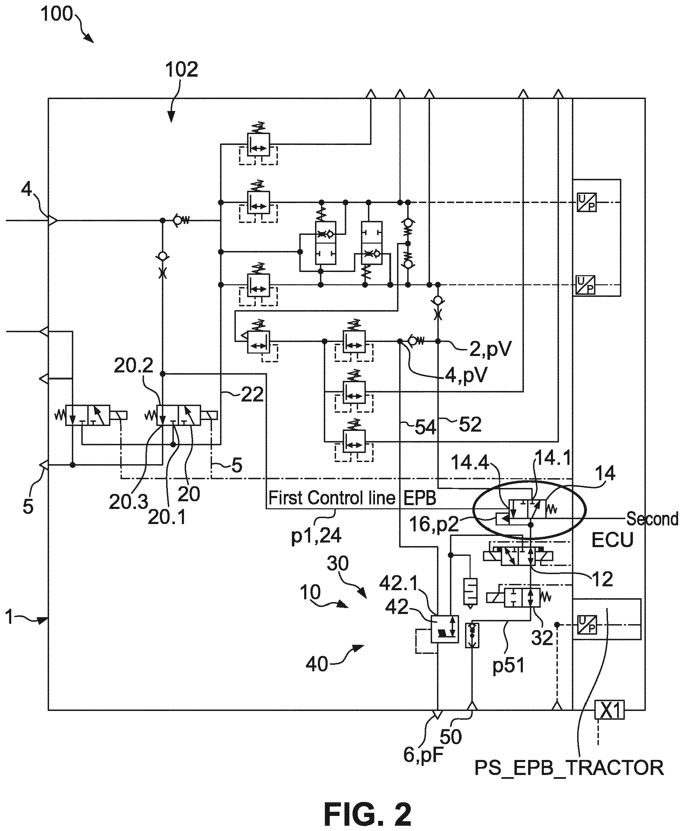

Um das Halteventil 14 in die zweite in Figur 1 nicht gezeigte Schaltstellung zu verbringen, in welcher der erste Halteventilanschluss 14.1 mit dem zweiten Halteventilanschluss 14.2 verbunden ist, wobei der erste Halteventilanschluss 14.1 mit dem Vorratsanschluss 2 verbunden ist, ist gemäß der hier gezeigten Ausführungsform ein Steuerventil 20 vorgesehen. Das Steuerventil 20 ist als elektrisch schaltbares 3/2-Wegeventil ausgebildet, das einen ersten Steuerventilanschluss 20.1, einen zweiten Steuerventilanschluss 20.2 und einen dritten Steuerventilanschluss 20.3 aufweist. Der erste Steuerventilanschluss 20.1 ist mit einer druckführenden Leitung 22 verbunden, die später noch genauer beschrieben werden wird. Die druckführende Leitung 22 führt im Betrieb permanent einen Betriebsdruck pD. Vorzugsweise liegt der Betriebsdruck pD erst dann vor, wenn auch Betriebsbremsen des Fahrzeugs mit Druck versorgt werden können. In der in Figur 1 gezeigten ersten Schaltstellung des Steuerventils 20 ist der dritte Steuerventilanschluss 20.3 mit dem zweiten Steuerventilanschluss 20.2 verbunden. Der dritte Steuerventilanschluss 20.3 ist mit einer oder der Entlüftung 5 verbunden, der zweite Steuerventilanschluss 20.2 ist mit einer ersten Steuerdruckleitung 24 verbunden, welche ihrerseits mit dem Halteventil-Steueranschluss 14.4 verbunden ist. Das heißt, in der in Figur 1 gezeigten ersten Schaltstellung (Ruhestellung) ist der Halteventil-Steueranschluss 14.4 entlüftet und das Halteventil 14 folglich in der ersten in Figur 1 gezeigten Schaltstellung. Wird nun das Steuerventil 20 in die zweite, in Figur 1 nicht gezeigte Stellung geschaltet, insbesondere durch Bereitstellen eines ersten Schaltsignals S1, wird der Betriebsdruck pD durch das Steuerventil 20 durchgesteuert und als erster Steuerdruck p1 am Halteventil-Steueranschluss 14.4 bereitgestellt. Sobald dieser Druck einen ersten Schwellwert überschreitet, schaltet das Halteventil 14 in die in Figur 2 nicht gezeigte zweite Schaltstellung, in der der dritte Halteventilanschluss 14.3 mit dem zweiten Halteventilanschluss 14.2 verbunden ist, sodass der Vorratsdruck pV von dem ersten Vorratsanschluss 2 durch das Halteventil 14 durchgesteuert und am ersten Bistabilventil 12 bereitgestellt wird.

Das erste Bistabilventil 12 und das Halteventil 14 sind Teil einer Vorsteuereinheit 30. Die Vorsteuereinheit 30 steuert insgesamt einen ersten Vorsteuerdruck pS1 aus, der dann an einer Hauptventileinheit 40 bereitgestellt wird. Neben dem Bistabilventil 12 und dem Halteventil 14, weist die Vorsteuereinheit in der in Figur 1 gezeigten Ausführungsform zusätzlich ein erstes 2/2-Wegeventil 32 auf. Das 2/2-Wegeventil 32 weist einen ersten 2/2-Wegeventil-Anschluss 32.1 und einen zweiten 2/2-Wegeventil-Anschluss 32.2 auf. Der erste 2/2-Wegeventil-Anschluss 32.1 ist mit dem ersten Bistabilventil 12 verbunden, genauer gesagt mit dem zweiten Bistabilventilanschluss 12.2. Das 2/2-Wegeventil 32 ist federbelastet in eine erste, offene Schaltstellung (in Fig. 1 gezeigt) vorgespannt, und kann durch Bestromen geschlossen werden. Der zweite 2/2-Wegeventil-Anschluss 32.2 ist über eine entsprechende pneumatische Leitung 33 mit einem Wechselventil 34 verbunden. Das Wechselventil 34 seinerseits ist dann mit einem ersten Relaisventil 42 verbunden, das Teil der Hauptventileinheit 40 ist. Über das Wechselventil 34 wird der erste Vorsteuerdruck pS1 von der Vorsteuereinheit 30 an der Hauptventileinheit 40 bereitgestellt. Die Hauptventileinheit 40 besteht hier aus dem ersten Relaisventil 42.

Das erste Relaisventil 42 weist einen ersten Relaisventil-Vorratsanschluss 42.1 auf, der in Figur 1 mit einem zweiten Vorratsanschluss 4 verbunden ist, an dem ebenfalls Vorratsdruck bereitgestellt wird. Der ersten Relaisventil-Vorratsanschluss 42.1 könnte aber ebenso mit dem ersten Vorratsanschluss 2 verbunden sein. Darüber hinaus weist das erste Relaisventil 42 einen ersten Relaisventil-Arbeitsanschluss auf, an dem das erste Relaisventil 42 den Federspeicherdruck pF aussteuert. Ferner weist das erste Relaisventil 42 einen ersten Relaisventil-Entlüftungsanschluss 42.3 auf, der mit der Entlüftung 5 verbunden ist sowie einen ersten Relaisventil-Steueranschluss 42.4, der den ersten Vorsteuerdruck pS1 empfängt. In Abhängigkeit von dem Empfang des ersten Steuerdrucks pS1 steuert das erste Relaisventil 42 dann basierend auf dem Vorratsdruck pV den Federspeicherbremsdruck pF in entsprechender Höhe aus.

Das Wechselventil 34 ist neben der pneumatischen Leitung 33 auch mit einem Löseanschluss 50 verbunden. Über den Lösanschluss 50 kann manuell ein manueller Druck pM zugeführt werden, um für den Fall, dass das Fahrzeug abgestellt ist, und stromlos ist, also die Federspeicherbremsen eingelegt sind, diese lösen zu können. Das Wechselventil 34 ist so ausgelegt, dass jeweils der höhere Druck, der vom 2/2-Wegeventil 32 oder den Löseanschluss 50 bereitgestellt wird, an den ersten Relaisventil-Steueranschluss 42.4 durchgesteuert wird.

In der Vorsteuereinheit 30 ist ferner eine Rückführleitung 16 vorgesehen. Die Rückführleitung 16 zweigt direkt stromabwärts des zweiten Halteventilanschlusses 14.2 ab und führt den vom Halteventil 14 am zweiten Halteventilanschluss 14.2 ausgesteuerten Druck zurück an den Halteventil-Steueranschluss 14.4. Hierdurch wird ermöglicht, dass sobald das Halteventil 14 einmal in die zweite in Figur 1 nicht gezeigte Schaltstellung geschaltet ist, diese gehalten werden kann. Das heißt, im Betrieb des Fahrzeugs wird in der Regel die vom Halteventil 14 eingenommene zweite Schaltstellung beibehalten, solange Vorratsdruck pV am ersten Vorratsanschluss 2 bereitgestellt wird. Dann kann im Betrieb unabhängig von der Schaltung des Steuerventils 20 nur durch die Vorsteuereinheit 30 der Betrieb der Federspeicherbremsen geregelt werden.

Wie ferner aus Figur 1 zu entnehmen ist, wird insbesondere die Vorsteuereinheit 30 durch eine Steuerung ECU gesteuert. Die Steuerung ECU stellt insbesondere am Bistabilventil 12 ein Bistabilsignal SR bereit, sowie am 2/2-Wegeventil 32 ein zweites Schaltsignal S2. Das 2/2-Wegeventil 32 kann dann insbesondere gepulst betrieben werden, um den Federspeicheranschluss 6 gepulst zu be- oder entlüften. Das Steuerventil 20 muss nicht zwangsläufig von der Steuerung ECU gesteuert werden, sondern kann von einer anderen oder übergeordneten Steuereinheit gesteuert werden. Das Schaltsignal S1 kann auch ein abgeleitetes Schaltsignal sein, das insbesondere von einem anderen Modul bereitgestellt wird.

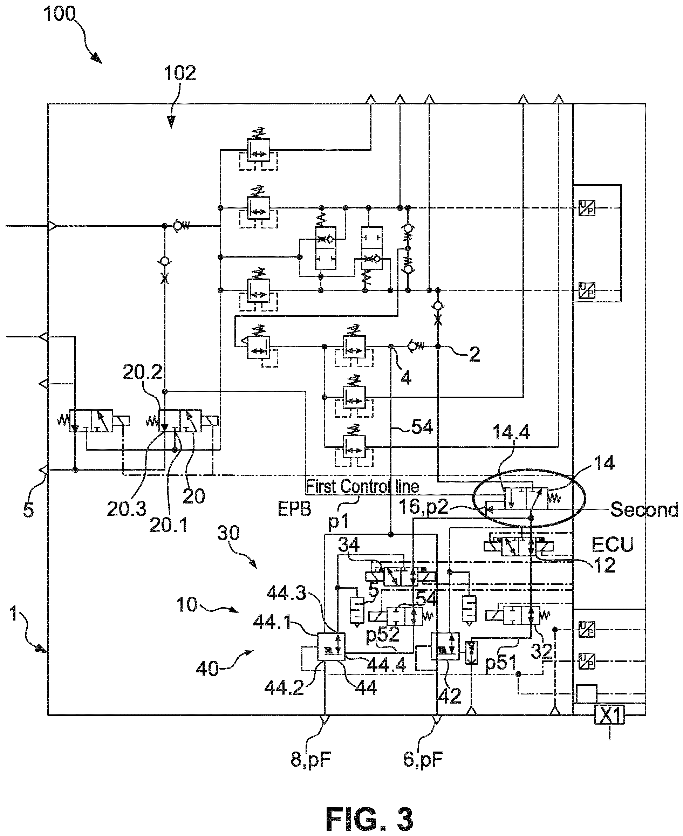

Die Figuren 2 und 3 illustrieren nun ein elektropneumatisches Parkbremsmodul 100, das neben einer elektropneumatischen Parkbremsventileinheit 1 auch eine Mehrkreisschutzventileinheit 102 aufweist. Gleiche und ähnliche Elemente sind mit den gleichen Bezugszeichen wie im ersten Ausführungsbeispiel versehen. Insofern wird vollumfänglich auf die obige Beschreibung Bezug genommen und im Folgenden werden insbesondere die Unterschiede erläutert.

Wiederum weist die elektropneumatische Parkbremsventileinheit 1 einen Federspeicheranschluss 6 auf, an dem der Federspeicherbremsdruck pF ausgesteuert werden kann. Die Vorsteuereinheit 30 und die Hauptventileinheit 40 sind identisch zu dem ersten Ausführungsbeispiel gemäß Fig. 1 ausgebildet. Die Vorsteuereinheit 30 umfasst genauer gesagt das erste Bistabilventil 12, das Halteventil 14 sowie das 2/2-Wegeventil 32. Die Hauptventileinheit 40 umfasst das erste Relaisventil 42.

Der Vorratsdruck pV wird über die Mehrkreisschutzventileinheit 102 bereitgestellt, die hier nicht im Einzelnen beschrieben werden soll. Mehrkreisschutzventileinheiten sind im Allgemeinen bekannt. Für die Bereitstellung des Vorratsdrucks pV zweigt eine erste Vorratsdruckleitung 52 aus der Mehrkreisschutzventileinheit 102 ab und ist mit dem ersten Halteventilanschluss 14.1 verbunden. Die Stelle der Abzweigung der ersten Vorratsdruckleitung 52 bildet in diesem Fall den ersten Vorratsanschluss 2. Weiterhin zweigt aus der Mehrkreisschutzventileinheit 102 eine zweite Vorratsdruckleitung 54 ab, die zum ersten Relaisventil 42 führt, genauer gesagt, zum ersten Relaisventil-Vorratsanschluss 42.1. Die zweite Vorratsdruckleitung 54 zweigt an einer Stelle ab, die den zweiten Vorratsanschluss 4 bildet.

Die Mehrkreisschutzventileinheit 102 verfügt, neben einigen Ventilen und verschiedenen Anschlüssen, auch über einen Einlass 104, der mit der Druckluftaufbereitung oder dergleichen verbunden sein kann. Die Mehrkreisschutzventileinheit 102 weist auch das Steuerventil 20 auf, das im Rahmen der Mehrkreisschutzventileinheit 102 dazu eingesetzt wird, während der Regenerationsphase eines Lufttrockners eine gedrosselte Rückströmung trockener Regenerationsluft aus dem Systemvolumen zu erlauben. Zu diesem Zweck kann das Steuerventil 20 dann in die zweite, in Figur 2 nicht gezeigte Schaltstellung verbracht werden. Da in diesem Fall allerdings die im Regelfall druckführende Leitung 22 über das Steuerventil 20 mit dem zweiten Steuerventilanschluss 20.2 verbunden ist, von dem aus die erste Steuerdruckleitung 24 abzweigt, wird über diese der erste Steuerdruck p1 an dem Halteventil 14 in der oben beschriebenen Weise bereitgestellt. Das Steuerventil 20 wird von der Steuerung ECU gesteuert, die in dem in Figur 2 gezeigten Ausführungsbeispiel sowohl für die Mehrkreisschutzventileinheit 102 als auch für die elektropneumatische Feststellbremsventileinheit 1 vorgesehen ist, sodass diese von der gemeinsamen Steuerung ECU gesteuert werden.

Figur 3 zeigt ein weiteres Ausführungsbeispiel des elektropneumatischen Parkbremsmoduls 100. Gleiche und ähnliche Elemente sind mit den gleichen Bezugszeichen wie in den vorigen Ausführungen bezeichnet, sodass vollumfänglich auf die obige Beschreibung Bezug genommen wird. Im Folgenden wird im Wesentlichen der Unterschied zum erste Ausführungsbeispiel des elektropneumatischen Parkbremsmoduls 100 (Fig. 2) beschrieben.

Der wesentliche Unterschied zum Ausführungsbeispiel gemäß Figur 2 liegt darin, dass das elektropneumatische Parkbremsmodul 100 gemäß Figur 2 für Nutzfahrzeuge ohne Anhänger vorgesehen ist, und das elektropneumatische Parkbremsmodul 100 gemäß Figur 3 für Nutzfahrzeuge mit Anhänger vorgesehen ist. Insofern umfassen sowohl die Vorsteuereinheit 30 als auch die Hauptventileinheit 40 eine Aufdoppelung der notwendigen Ventile und das elektropneumatische Parkbremsmodul 100 umfasst ferner einen Anhängeranschluss 8, an dem ein Anhängerdruck pT bereitgestellt werden kann, um Federspeicherbremsen des Anhängers zu lösen, oder zuzuspannen. Die Bereitstellung des Anhängerdrucks pT erfolgt in analoger Weise wie die Bereitstellung des Federspeicherbremsdrucks pF. Zu diesem Zweck weist die Vorsteuereinheit 30 ein zweites Bistabilventil 34 sowie ein zweites 2/2-Wegeventil 54, auf die ebenso verschaltet sind, wie das erst Bistabilventil 12 und das erste 2/2-Wegeventil 32. Ferner weist die Hauptventileinheit 40 ein zweites Relaisventil 44 auf, das ebenso verschaltet ist wie das erste Relaisventil 42. Es weist daher einen zweiten Relaisventil-Vorratsanschluss 44.1 auf, der ebenso wie der erste Relaisventil-Vorratsanschluss 42.1 mit der zweiten Vorratsdruckleitung 54 verbunden ist.

Darüber hinaus weist es einen zweiten Relaisventil-Arbeitsanschluss 44.2 auf, der mit dem Anhängeranschluss 8 verbunden ist, einen zweiten Relaisventil-Entlüftungsanschluss 44.3, der mit der Entlüftung 5 verbunden ist sowie einen zweiten Relaisventil-Steueranschluss 44.3, der mit der Vorsteuereinheit 30, genauer gesagt über das zweite 2/2-Wege-Schaltventil 54 mit dem zweiten Bistabilventil 34 verbunden ist. Sowohl dem ersten Bistabilventil 12 als auch dem zweiten Bistabilventil 34, ist das Halteventil 14 vorgeschaltet. In der Steuerung ergibt sich hier dann in Bezug auf das Halteventil 14 kein weiterer Unterschied.

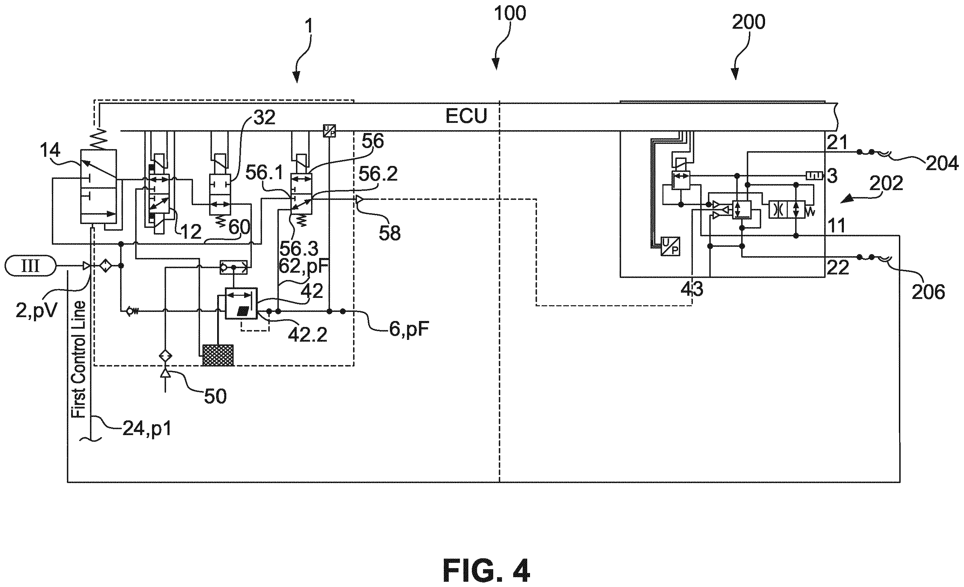

In Figur 4 dargestellt ist nun ein elektropneumatisches Parkbremsmodul 100, das neben der elektropneumatischen Parkbremsventileinheit 1 und gegebenenfalls auch der Mehrkreisschutzventileinheit 102 (vgl. Fig. 2, 3) zusätzlich eine Anhängersteuereinheit 200 umfasst. Alle drei Einheiten, die elektropneumatische Parkbremsventileinheit 1, die Mehrkreisschutzventileinheit 102 und die Anhängersteuereinheit 200, sind gemeinsam in ein Modul integriert. Der Einfachheit halber sind in Figur 4 die Elemente der Mehrkreisschutzventileinheit 102 nicht gezeigt. Gleiche und ähnliche Elemente sind wiederum mit den gleichen Bezugszeichen versehen, sodass vollumfänglich auf die obige Beschreibung Bezug genommen wird. Figur 4 ist eine schematische Darstellung und die Integration wird insbesondere durch die gemeinsam vorgesehene Steuerung ECU dargestellt. Im Folgenden wird insbesondere auf die Unterschiede zu den ersten Ausführungsbeispielen eingegangen.

Der maßgebliche Unterschied liegt in der Anhängersteuereinheit 200, die im Grunde wie bekannt aufgebaut sein kann. Sie weist eine Anhängersteuer-Ventileinheit 202 mit darin integrierten Ventilen auf, die hier nicht im Einzelnen beschrieben werden sollen. Zudem weist die Anhängersteuereinheit 200 einen Kupplungskopf "Bremse" 204 und einen Kupplungskopf "Vorrat" 206 auf. Über den Kupplungskopf "Bremse" 204 wird ein Steuerdruck für Betriebsbremsen des Anhängers übergeben, während über den Kupplungskopf "Vorrat" 206 ein Vorratsdruck für den Anhänger übergeben wird. Die Integration zwischen der Parkbremsventileinheit 1 und der Anhängersteuereinheit 200 hat insbesondere dann einen Vorteil, wenn eine sogenannte skandinavische Anhängersteuerung umgesetzt werden soll, oder auch im Falle von Funktionalitäten wie einer Anhängerkontrollstellung, einer Streckbremsung oder eine Zusatzbremsung. Werden im Zugfahrzeug für gewissen Funktionen Federspeicherbremsen eingesetzt und daher der Federspeicheranschluss 6 entlüftet, sollen für ebensolche Funktionalitäten, in Anhängern die Betriebsbremsen zugespannt werden. Für diesen Zweck weist die elektropneumatische Parkbremsventileinheit 1 gemäß diesem vierten Ausführungseispiel ein Anhängerventil 56 auf, das dem ersten Relaisventil 42 nachgeschaltet ist und mit einem Anhängersteueranschluss 58 verbunden ist. Genauer ist das Anhängerventil 56 als 3/2-Wegeventil ausgebildet und weist einen ersten Anhängerventilanschluss 56.1, einen zweiten Anhängerventilanschluss 56.2 und einen dritten Anhängerventilanschluss 56.3 auf. Der erste Anhängerventilanschluss 56.1 ist über eine Vorratsabzweigleitung 60 mit dem erste Vorratsanschluss 2 verbunden. Der zweite Anhängerventilanschluss 56.2 ist mit dem Anhängersteueranschluss verbunden. Der dritte Anhängerventilanschluss 56.3 ist mit einer zweiten Abzweigleitung 62 verbunden, die zwischen dem ersten Relaisventil-Arbeitsanschluss 42.2 und dem Federspeicheranschluss 6 abzweigt, also den Federspeicherbremsdruck pF an dem dritten Anhängerventilanschluss 56.3 bereitstellt. Je nach Schaltstellung des Anhängerventils 56 kann also an dem Anhängersteueranschluss 58 entweder der Vorratsdruck pV oder der Anhängerbremsdruck pF bereitgestellt werden. Dieser wird dann über eine Anhängersteuerleitung 64 an dem Anhängersteuerventil 200 bereitgestellt, dort gegebenenfalls invertiert, um dann basierend auf dem Einlegen von Federspeicherbremsen des Zugfahrzeugs, in übereinstimmender Weise auch Betriebsbremsen des Anhängers mit einzubremsen.

### Bezugszeichenliste (Bestandteil der Beschreibung)

- 1: Elektropneumatische Parkbremsventileinheit
- 2: Erster Vorratsanschluss
- 4: Zweiter Vorratsanschluss
- 6: Federspeicheranschluss
- 8: Anhängeranschluss
- 10: Feststellbremsventilanordnung
- 12: Erstes Bistabilventil
- 12.1: Erster Bistabilventilanschluss
- 12.2: Zweiter Bistabilventilanschluss
- 12.3: Dritter Bistabilventilanschluss
- 14: pneumatisch schaltbares Halteventil
- 14.1: Erster Halteventilanschluss
- 14.2: Zweiter Halteventilanschluss
- 14.3: Dritter Halteventilanschluss
- 14.4: Halteventil-Steueranschluss
- 16: Rückführleitung
- 20: Steuerventil
- 20.1: Erster Steuerventilanschluss
- 20.2: Zweiter Steuerventilanschluss
- 20.3: Dritter Steuerventilanschluss
- 22: Druckführende Leitung
- 24: Erste Steuerdruckleitung
- 30: Vorsteuereinheit
- 32: Erstes 2/2-Wegeventil
- 32.1: Erster 2/2-Wegeventil-Anschluss
- 32.2: Zweiter 2/2-Wegeventil-Anschluss
- 33: Pneumatische Leitung
- 34: Wechselventil
- 40: Hauptventileinheit
- 42: Erstes Relaisventil
- 42.1: Erster Relaisventil-Vorratsanschluss
- 42.2: Erster Relaisventil-Arbeitsanschluss
- 42.3: Erster Relaisventil-Entlüftungsanschluss
- 42.4: Erster Relaisventil-Steueranschluss
- 44: Zweites Relaisventil
- 44.1: Zweiter Relaisventil-Vorratsanschluss
- 44.2: Zweiter Relaisventil-Arbeitsanschluss
- 44.3: Zweiter Relaisventil-Entlüftungsanschluss
- 44.3: Zweiter Relaisventil-Steueranschluss
- 50: Löseanschluss
- 52: Erste Vorratsdruckleitung
- 54: Zweites 2/2-Wege-Schaltventil
- 56: Anhängerventil
- 56.1: Erster Anhängerventilanschluss
- 56.2: Zweiter Anhängerventilanschluss
- 56.3: Dritter Anhängerventilanschluss
- 58: Anhängersteueranschluss
- 60: Vorratsabzweigleitung
- 62: Zweite Abzweigleitung
- 64: Anhängersteuerleitung
- 100: Elektropneumatisches Parkbremsmodul
- 102: Mehrkreisschutzventileinheit
- pV: Vorratsdruck
- pF: Federspeicherbremsdruck
- pD: Betriebsdruck
- p1: Erster Steuerdruck
- pS1: Erster Vorsteuerdruck
- pT: Anhängerdruck
- S1: Erstes Schaltsignal

## Patentansprüche

1. Elektropneumatische Parkbremsventileinheit (1) für ein elektronisch gesteuertes pneumatisches Bremssystem eines Fahrzeugs, insbesondere Nutzfahrzeugs, mit
wenigstens einem ersten Vorratsanschluss (2) zum Empfangen von Vorratsdruck (pV) von einer Druckluftquelle,
wenigstens einem Federspeicheranschluss (6) zum Anschließen von wenigstens einem Federspeicherbremszylinder des Fahrzeugs,
einer Feststellbremsventilanordnung (10) mit wenigstens einem ersten Bistabilventil (12), wobei in Abhängigkeit von der Schaltung des ersten Bistabilventils (12) ein Federspeicherbremsdruck (pF) an dem Federspeicheranschluss (6) aussteuerbar ist,
ein pneumatisch schaltbares Halteventil (14) mit einem Halteventil-Steueranschluss (14.4), das zwischen den ersten Vorratsanschluss (2) und das erste Bistabilventil (12) geschaltet ist und federbelastet in eine erste Schaltstellung vorgespannt ist, in welcher das erste Bistabilventil (12) mit einer Entlüftung (5) verbunden ist, und bei Überschreiten eines ersten Schwellwerts durch einen am Halteventil-Steueranschluss (14.4) bereitgestellten ersten Steuerdruck (p1) in eine zweite Schaltstellung schaltet, in der das erste Bistabilventil (12) zum Empfang von Vorratsdruck (pV) mit dem ersten Vorratsanschluss (2) verbunden ist
**dadurch gekennzeichnet, dass**
der erste Steuerdruck (p1) von einem elektrisch schaltbaren Steuerventil (20) ausgesteuert wird, welches Teil der elektropneumatischen Parkbremsventileinheit (1) oder entfernt zu dieser angeordnet ist.

2. Elektropneumatische Parkbremsventileinheit (1) nach Anspruch 1, wobei das Halteventil (14) einen mit dem ersten Vorratsanschluss (2) verbundenen ersten Halteventilanschluss (14.1), einen mit dem ersten Bistabilventil (12) verbundenen zweiten Halteventilanschluss (14.2) und einen mit der Entlüftung (5) verbundenen dritten Halteventilanschluss (14.3) aufweist.

3. Elektropneumatische Parkbremsventileinheit (1) nach Anspruch 1 oder 2, wobei das Steuerventil (20) einen mit einer wenigstens während des Betriebs des Nutzfahrzeugs druckführenden pneumatischen Leitung (22) verbundenen ersten Steuerventilanschluss (20.1), einen mit dem Halteventil-Steueranschluss (14.4) verbundenen zweiten Steuerventilanschluss (20.2) und einen mit einer oder der Entlüftung (5) verbundenen dritten Steuerventilanschluss (20.3) aufweist, wobei das Steuerventil (20) stromlos den zweiten Steuerventilanschluss (20.2) mit dem dritten Steuerventilanschluss (20.3) verbindet.

4. Elektropneumatische Parkbremsventileinheit (1) nach einem der vorstehenden Ansprüche, aufweisend eine Halteventil-Rückführleitung (16), die einen vom Halteventil (14) an das erste Bistabilventil (12) ausgesteuerten Druck als zweiten Steuerdruck (p2) an dem Halteventil-Steueranschluss (14.4) bereitstellt.

5. Elektropneumatische Parkbremsventileinheit (1) nach einem der vorstehenden Ansprüche, wobei die Feststellbremsventilanordnung (10) eine das erste Bistabilventil (12) aufweisende Vorsteuereinheit (30) zum Bereitstellen wenigsten eines ersten Vorsteuerdrucks (pS1) und eine Hauptventileinheit (40) umfasst, die den ersten Vorsteuerdruck (pS1) empfängt und in Übereinstimmung mit dem Empfang des ersten Vorsteuerdrucks (pS1) den Feststellbremsdruck (pF) aussteuert.

6. Elektropneumatische Parkbremsventileinheit (1) nach Anspruch 5, wobei die Vorsteuereinheit (30) ein dem ersten Bistabilventil (12) zugeordnetes erstes 2/2-Wegeventil (32) aufweist, welches einen mit dem ersten Bistabilventil (12) verbundenen ersten 2/2-Wegeventil-Anschluss (32.1) und einen mit der Hauptventileinheit (40) verbundenen zweiten 2/2-Wegeventil-Anschluss (32.2) aufweist zum Bereitstellen des ersten Vorsteuerdrucks (pS1) an der Hauptventileinheit (40).

7. Elektropneumatische Parkbremsventileinheit (1) nach Anspruch 5 oder 6, wobei die Hauptventileinheit (40) wenigstens ein erstes Relaisventil (42) aufweist, welches einen den Vorratsdruck (pV) empfangenden ersten Relaisventil-Vorratsanschluss (42.1), einen mit dem Federspeicheranschluss (6) verbundenen ersten Relaisventil-Arbeitsanschluss (42.2), einen mit einer oder der Entlüftung (5) verbundenen ersten Relaisventil-Entlüftungsanschluss (42.3) und einen mit der Vorsteuereinheit (30) verbundenen und den ersten Vorsteuerdruck (pS1) empfangenden ersten Relaisventil-Steueranschluss (42.4) aufweist.

8. Elektropneumatische Parkbremsventileinheit (1) nach einem der vorstehenden Ansprüche, aufweisend einen Löseanschluss (50) zum manuellen Bereitstellen eines Lösedrucks (pM) zum manuellen Aussteuern des Federspeicherdrucks (pF).

9. Elektropneumatische Parkbremsventileinheit (1) nach einem der vorstehenden Ansprüche 5 bis 7, wobei die Vorsteuereinheit (30) ein zweites Bistabilventil (34) zum Bereitstellen eines zweiten Vorsteuerdrucks (pS2) an der Hauptventileinheit (40) aufweist, wobei die Hauptventileinheit (40) den zweiten Vorsteuerdruck (pS2) empfängt und in Übereinstimmung mit dem Empfang des zweiten Vorsteuerdrucks (pS2) einen Anhängerdruck (pT) an einem Anhängeranschluss (8) aussteuert zum Lösen von Federspeicherbremsen eines an das Fahrzeug angeschlossenen Anhängers.

10. Elektropneumatische Parkbremsventileinheit (1) nach Anspruch 9, wobei die Hauptventileinheit (40) ein zweites Relaisventil (44) aufweist, welches einen den Vorratsdruck (pV) empfangenden zweiten Relaisventil-Vorratsanschluss (44.1), einen mit dem Anhängeranschluss (8) verbundenen zweiten Relaisventil-Arbeitsanschluss (44.2), einen mit einer oder der Entlüftung (5) verbundenen zweiten Relaisventil-Entlüftungsanschluss (42.4) und einen mit der Vorsteuereinheit (30) verbundenen und den zweiten Vorsteuerdruck (pS2) empfangenden zweiten Relaisventil-Steueranschluss (44.4) aufweist.

11. Elektropneumatisches Parkbremsmodul (100), mit
einer elektropneumatischen Parkbremsventileinheit (1) nach einem der vorstehenden Ansprüche, und
einer Mehrkreisschutzventileinheit (102), die bezogen auf die Druckluftquelle der elektropneumatischen Parkbremsventileinheit (1) vorgeschaltet ist, wobei die Mehrkreisschutzventileinheit (102) den ersten Steuerdruck (p1) bereitstellt.

12. Elektropneumatisches Parkbremsmodul (100) nach Anspruch 11, wobei die elektropneumatische Parkbremsventileinheit (1) nach Anspruch 1 ausgebildet ist, und das elektrisch schaltbare Steuerventil (20) ein Ventil der Mehrkreisschutzventileinheit (102) ist.

13. Elektropneumatisches Parkbremsmodul (100) nach einem der Ansprüche 11 bis 12, wobei weiter in das Parkbremsmodul (100) eine Anhängersteuereinheit (200) integriert ist.

14. Luftaufbereitungsmodul umfassend ein elektropneumatisches Parkbremsmodul (100) nach Anspruch 11 oder 12, und eine Luftaufbereitungseinheit.

15. Verfahren zum Betreiben eines elektronisch gesteuerten pneumatischen Bremssystems eines Fahrzeugs, insbesondere Nutzfahrzeugs, mit einer elektropneumatischen Parkbremsventileinheit (1) nach einem der Ansprüche 1 bis 10 mit den Schritten:
- Ermitteln eines Fehlers in dem Bremssystem, der ein Schalten des ersten Bistabilventils (12) verhindert;
- Entlüften des Federspeicheranschlusses (6) zum Stoppen des Fahrzeugs; und
- Verbinden von wenigstens zwei Anschlüssen des ersten Bistabilventils (12) mit einer Entlüftung (5) zum Verhindern einer Aussteuerung des Federspeicherbremsdrucks (pF) nach erfolgter Entlüftung des Federspeicheranschlusses (6).

16. Fahrzeug, insbesondere Nutzfahrzeug, mit einem elektronisch gesteuerten pneumatischen Bremssystem mit einer elektropneumatischen Parkbremsventileinheit (1) nach einem der Ansprüche 1 bis 10.

## Claims

1. Electropneumatic parking-brake valve unit (1) for an electronically controlled pneumatic braking system of a vehicle, in particular a commercial vehicle, comprising
at least one first supply connector (2) for receiving supply pressure (pV) from a compressed air source,
at least one spring-loaded connector (6) for connecting at least one spring-loaded brake actuator of a vehicle,
a parking-brake valve assembly (10) having at least one first bistable valve (12), wherein a spring-loaded brake pressure (pF) can be modulated at the spring-loaded connector (6) depending on the switching of the first bistable valve (12),
a pneumatically switchable holding valve (14) having a holding valve control connector (14.4), which is connected between the first supply connector (2) and the first bistable valve (12), and is spring-loaded into a first switching position in which the first bistable valve (12) is connected to a vent (5), and, when a first threshold value is exceeded by a first control pressure (p1) provided at the holding valve control connector (14.4), switches into a second switching position in which the first bistable valve (12) is connected to the first supply connector (2) for receiving supply pressure (pV),
**characterized in that**
the first control pressure (p1) is modulated by an electrically switchable control valve (20) which is part of the electropneumatic parking-brake valve unit (1) or is arranged remotely therefrom.

2. Electropneumatic parking-break valve unit (1) according to claim 1, wherein the holding valve (14) comprises a first holding valve connector (14.1) connected to the first supply connector (2), a second holding valve connector (14.2) connected to the first bistable valve (12) and a third holding valve connector (14.3) connected to the vent (5).

3. Electropneumatic parking-brake valve unit (1) according to claim 1 or 2, wherein the control valve (20) has a first control valve connector (20.1) connected to a pneumatic line (22) which is pressure-conducting at least during the operation of the commercial vehicle, a second control valve connector (20.2) connected to the holding valve control connector (14.4), and a third control valve connector (20.3) connected to a or the vent (5), wherein the control valve (20) currentlessly connects the second control valve connector (20.2) to the third control valve connector (20.3).

4. Electropneumatic parking-brake valve unit (1) according to any of the preceding claims, comprising a holding valve return line (16) which provides a pressure modulated by the holding valve (14) to the first bistable valve (12) as the second control pressure (p2) at the holding valve control connector (14.4).

5. Electropneumatic parking-brake valve unit (1) according to any of the preceding claims, wherein the parking-brake valve assembly (10) comprises a pilot control unit (30), having the first bistable valve (12) and for providing at least a first pilot control pressure (pS1), and a main valve unit (40), which receives the first pilot control pressure (pS1) and modulates the parking-brake pressure (pF) in accordance with the receipt of the first control pilot pressure (pS1).

6. Electropneumatic parking-brake valve unit (1) according to claim 5, wherein the pilot control unit (30) has a first 2/2-way valve (32) associated with the first bistable valve (12), which first 2/2-way valve has a first 2/2-way valve connector (32.1) connected to the first bistable valve (12) and a second 2/2-way valve connector (32.2) connected to the main valve unit (40) for providing the first pilot control pressure (pS1) at the main valve unit (40).

7. Electropneumatic parking-brake valve unit (1) according to claim 5 or 6, wherein the main valve unit (40) comprises at least one first relay valve (42) which has a first relay valve supply connector (42.1) receiving the supply pressure (pV), a first relay valve working connector (42.2) connected to the spring-loaded connector (6), a first relay valve vent connector (42.3) connected to a or the vent (5), and a first relay valve control connector (42.4) which is connected to the pilot control unit (30) and receives the first pilot control pressure (pS1).

8. Electropneumatic parking-brake valve unit (1) according to any of the preceding claims, comprising a release connector (50) for manually providing a release pressure (pM) for manually modulating the spring-loaded pressure (pF).

9. Electropneumatic parking-brake valve unit (1) according to any of the preceding claims 5 to 7, wherein the pilot control unit (30) comprises a second bistable valve (34) for providing a second pilot control pressure (pS2) at the main valve unit (40), wherein the main valve unit (40) receives the second pilot control pressure (pS2) and, in accordance with the receipt of the second pilot control pressure (pS2), modulates a trailer pressure (pT) at a trailer connector (8) for releasing the spring-loaded brakes of a trailer connected to the vehicle.

10. Electropneumatic parking-brake valve unit (1) according to claim 9, wherein the main valve unit (40) comprises a second relay valve (44) which has a second relay valve supply connector (44.1) receiving the supply pressure (pV), a second relay valve working connector (44.2) connected to the trailer connector (8), a second relay valve vent connector (42.4) connected to a or the vent (5), and a second relay valve control connector (44.4) which is connected to the pilot control unit (30) and receives the second pilot pressure (pS2).

11. Electropneumatic parking-brake module (100), comprising
an electropneumatic parking-brake valve unit (1) according to any of the preceding claims, and
a multi-circuit protection valve unit (102) which is connected upstream of the compressed air source of the electropneumatic parking-brake valve unit (1), wherein the multi-circuit protection valve unit (102) provides the first control pressure (p1).

12. Electropneumatic parking-brake module (100) according to claim 11, wherein the electropneumatic parking-brake valve unit (1) is designed according to claim 1, and the electrically switchable control valve (20) is a valve of the multi-circuit protection valve unit (102).

13. Electropneumatic parking-brake module (100) according to claims 11 to 12, wherein a trailer control unit (200) is further integrated into the parking-brake module (100).

14. Air conditioning module comprising an electropneumatic parking-brake module (100) according to claim 11 or 12, and an air conditioning unit.

15. Method for operating an electronically controlled pneumatic braking system of a vehicle, in particular a commercial vehicle, comprising an electropneumatic parking-brake valve unit (1) according to any of claims 1 to 10, comprising the steps of:
- determining a fault in the brake system that prevents switching of the first bistable valve (12);
- venting the spring-loaded connector (6) for stopping the vehicle; and
- connecting at least two connectors of the first bistable valve (12) to a vent (5) for preventing modulation of the spring-loaded brake pressure (pF) after the spring-loaded connector (6) has been vented.

16. Vehicle, in particular a commercial vehicle, comprising an electronically controllable pneumatic brake system having a parking-brake valve unit (1) according to any of claims 1 to 10.

## Revendications

1. Unité de soupape de frein de stationnement électropneumatique (1) pour un système de freinage pneumatique à commande électronique d'un véhicule, en particulier d'un véhicule utilitaire, comportant
au moins un premier raccord d'alimentation (2) pour la réception d'une pression d'alimentation (pV) d'une source d'air comprimé,
au moins un raccord d'accumulateur à ressort (6) pour le raccordement d'au moins un cylindre de frein à accumulateur à ressort du véhicule,
un système de soupape de frein à main (10) comportant au moins une première soupape bistable (12), dans laquelle, en fonction de la commutation de la première soupape bistable (12), une pression de frein d'accumulateur à ressort (pF) peut être réglée sur le raccord d'accumulateur à ressort (6),
une soupape de retenue (14) à commutation pneumatique comportant un raccord de commande de soupape de retenue (14.4), qui est interposée entre le premier raccord d'alimentation (2) et la première soupape bistable (12) et est précontrainte par ressort dans une première position de commutation, dans laquelle la première soupape bistable (12) est reliée à une purge (5) et, en cas de dépassement d'une première valeur seuil, est commutée, par une première pression de commande (p1) fournie au niveau du raccord de commande de soupape de retenue (14.4), dans une seconde position de commutation, dans laquelle la première soupape bistable (12) est reliée pour la réception de la pression d'alimentation (pV) avec le premier raccord d'alimentation (2)
**caractérisée en ce que**
la première pression de commande (p1) est commandée par une soupape de commande (20) à commutation électrique, qui forme une partie de l'unité de soupape de frein de stationnement électropneumatique (1) ou est disposée à distance de celle-ci.

2. Unité de soupape de frein de stationnement électropneumatique (1) selon la revendication 1, dans laquelle la soupape de retenue (14) présente un premier raccord de soupape de retenue (14.1) relié au premier raccord d'alimentation (2), un deuxième raccord de soupape de retenue (14.2) relié à la première soupape bistable (12) et un troisième raccord de soupape de retenue (14.3) relié à la purge (5).

3. Unité de soupape de frein de stationnement électropneumatique (1) selon la revendication 1 ou 2, dans laquelle la soupape de commande (20) présente un premier raccord de soupape de commande (20.1) relié à une conduite pneumatique (22) qui exerce une pression au moins pendant le fonctionnement du véhicule utilitaire, un deuxième raccord de soupape de commande (20.2) relié au raccord de commande de soupape de retenue (14.4) et un troisième raccord de soupape de commande (20.3) relié à une ou à la purge (5), dans laquelle la soupape de commande (20) relie sans courant le deuxième raccord de soupape de commande (20.2) au troisième raccord de soupape de commande (20.3).

4. Unité de soupape de frein de stationnement électropneumatique (1) selon l'une des revendications précédentes, présentant une conduite de retour de soupape de retenue (16), qui fournit une pression commandée par la soupape de retenue (14) à la première soupape bistable (12) en tant que deuxième pression de commande (p2) au raccord de commande de soupape de retenue (14.4).

5. Unité de soupape de frein de stationnement électropneumatique (1) selon l'une des revendications précédentes, dans laquelle le système de soupape de frein à main (10) comprend une unité de commande pilote (30) présentant la première soupape bistable (12) pour la fourniture d'au moins une première pression pilote (pS1) et une unité de soupape principale (40), qui reçoit la première pression pilote (pS1) et commande la pression de frein à main en concordance (pF) avec la réception de la première pression pilote (pS1).

6. Unité de soupape de frein de stationnement électropneumatique (1) selon la revendication 5, dans laquelle l'unité de commande pilote (30) présente une première soupape à 2/2 voies (32) reliée à la première soupape bistable (12), qui présente un premier raccord de soupape à 2/2 voies (32.1) relié à la première soupape bistable (12) et un deuxième raccord de soupape à 2/2 voies (32.2) relié à l'unité de soupape principale (40) pour la fourniture de la première pression pilote (pS1) à l'unité de soupape principale (40).

7. Unité de soupape de frein de stationnement électropneumatique (1) selon la revendication 5 ou 6, dans laquelle l'unité de soupape principale (40) présente au moins une première soupape de relais (42), qui présente un premier raccord d'alimentation de soupape de relais (42.1) recevant la pression d'alimentation (pV), un premier raccord de travail de soupape de relais (42.2) relié au raccord d'accumulateur à ressort (6), un premier raccord de purge de soupape de relais (42.3) relié à une ou à la purge (5) et présente le premier raccord de commande de soupape de relais (42.4) relié à l'unité de commande pilote (30) et recevant la première pression pilote (pS1).

8. Unité de soupape de frein de stationnement électropneumatique (1) selon l'une des revendications précédentes, présentant un raccord de desserrage (50) pour la fourniture manuelle d'une pression de desserrage (pM) pour la commande manuelle de la pression d'accumulateur à ressort (pF).

9. Unité de soupape de frein de stationnement électropneumatique (1) selon l'une des revendications précédentes 5 à 7, dans laquelle l'unité de commande pilote (30) présente une deuxième soupape bistable (34) pour la fourniture d'une deuxième pression pilote (pS2) à l'unité de soupape principale (40), dans laquelle l'unité de soupape principale (40) reçoit la deuxième pression pilote (pS2) et commande une pression de remorque (pT) à un raccord de remorque (8) en concordance avec la réception de la deuxième pression pilote (pS2) pour le desserrage du frein d'accumulateur à ressort d'une remorque reliée au véhicule.

10. Unité de soupape de frein de stationnement électropneumatique (1) selon la revendication 9, dans laquelle l'unité de soupape principale (40) présente une deuxième soupape de relais (44), qui présente un deuxième raccord d'alimentation de soupape de relais (44.1) recevant la pression d'alimentation (pV), un deuxième raccord de travail de soupape de relais (44.2) relié au raccord de remorque (8), un deuxième raccord de purge de soupape de relais (42.4) relié à une ou la purge (5) et présente le deuxième raccord de commande de soupape de relais (44.4) relié à l'unité de commande pilote (30) et recevant la deuxième pression pilote (pS2).

11. Module de frein de stationnement électropneumatique (100), comportant
une unité de soupape de frein de stationnement électropneumatique (1) selon l'une des revendications précédentes et
une unité de soupape de protection à plusieurs circuits (102), qui est montée en amont par rapport à la source d'air comprimé de l'unité de soupape de frein de stationnement électropneumatique (1), dans lequel l'unité de soupape de protection à plusieurs circuits (102) fournit la première pression de commande (p1).

12. Module de frein de stationnement électropneumatique (100) selon la revendication 11, dans lequel l'unité de soupape de frein de stationnement électropneumatique (1) est formée selon la revendication 1 et la soupape de commande (20) à commutation électrique est une soupape de l'unité de soupape de protection à plusieurs circuits (102).

13. Module de frein de stationnement électropneumatique (100) selon l'une des revendications 11 à 12, dans lequel en outre une unité de commande de remorque (200) est intégrée dans le module de frein de stationnement (100).

14. Module de traitement de l'air comprenant un module de frein de stationnement électropneumatique (100) selon la revendication 11 ou 12 et une unité de traitement de l'air.

15. Procédé pour faire fonctionner un système de freinage pneumatique à commande électronique d'un véhicule, en particulier un véhicule utilitaire, comportant une unité de soupape de frein de stationnement électropneumatique (1) selon l'une des revendications 1 à 10 comportant les étapes de :
- détermination d'une défaillance dans le système de freinage, qui empêche une commutation de la première soupape bistable (12) ;
- purge du raccord d'accumulateur à ressort (6) pour l'arrêt du véhicule ; et
- liaison d'au moins deux raccords de la première soupape bistable (12) avec une purge (5) pour empêcher une commande de la pression de frein d'accumulateur à ressort (pF) après que la purge du raccord d'accumulateur à ressort (6) a été effectuée.

16. Véhicule, en particulier véhicule utilitaire, comportant un système de freinage pneumatique à commande électronique comportant une unité de soupape de frein de stationnement électropneumatique (1) selon l'une des revendications 1 à 10.
